# EUROPÄISCHE PATENTSCHRIFT

(11) **EP 1 990 586 B1**
(45) Veröffentlichungstag und Bekanntmachung des Hinweises auf die Patenterteilung: **06.10.2010**
(21) Anmeldenummer: 07009430.5
(22) Anmeldetag: 10.05.2007
(51) Int. Cl.: F24J 2/54, H01L 31/042

(54) **Tragesystem für eine nachführbare Solaranlage und Bausatz**
Supporting system for a tracking solar installation and mounting set
Système de support pour une installation solaire avec dispositif de poursuite et kit de montage

(43) Veröffentlichungstag der Anmeldung: 12.11.2008
(73) Patentinhaber: PVStrom GmbH & Co.KG, 74366 Kirchheim am Neckar (DE)
(72) Erfinder: Ebrahimi, Kambis, 74366 Kirchheim am Neckar (DE); Ebrahimi, Cyrosh, 74357 Bönnigheim (DE); Heckert, Gerold, 73434 Sachsenheim (DE)
(74) Vertreter: Bittner, Thomas L.

(56) Entgegenhaltungen:
- WO-A-03/031879
- DE-A1- 3 644 450
- DE-A1-102005 015 346
- DE-U1-202004 001 642
- FR-A- 2 354 590
- FR-A- 2 461 331
- US-A- 4 174 704
- US-A- 4 204 214

## Beschreibung

Die Erfindung betrifft ein Tragesystem für eine nachführbare Solaranlage, insbesondere bodengestützte Solaranlage, und Bausatz.

### Hintergrund der Erfindung

Solaranlagen werden genutzt, Sonnenenergie in elektrische Energie umzuwandeln. Um die Sonnenstrahtlung möglichst effizient zu nutzen, wurden nachführbare Solaranlagen vorgeschlagen, bei denen eine flächige Anordnung von Solarmodulen der tageszeitabhängigen Sonnenstellung automatisch nachgeführt wird. Dieses erfolgt üblicherweise mittels Schwenken einer die Solarmodule aufnehmenden Solarmodulaufnahme um eine Schwenkachse. Die Solarmodulaufnahme dient dazu, mehrere Solarmodule, die ihrerseits mit Solarzellen bestückt sind, in der flächigen Anordnung zu halten. Zum schwenkbaren Aufstellen ist die Solarmodulaufnahme an einem Ständersystem montiert, welches seinerseits üblicherweise auf dem Erdboden angeordnet ist. Neben dieser bodengestützten Ausführung von Solaranlagen sind auch Anlagen bekannt, die auf oder an Gebäuden montiert werden, insbesondere auf Dächern.

Vielfältige Ausführungen von nachführbaren Solaranlagen wurden vorgeschlagen, um das tageszeitabhängige Nachführen der Solarmodulaufnahme entsprechend der Sonnenstellung umzusetzen. Das Nachführen der Solarmodulaufnahme kann entweder gemäß fest voreingestellten Tageszeitangaben oder sensorgesteuert erfolgen. Bei der letztgenannten Ausführung werden mit Hilfe von Sensoren Informationen über den konkret vorhandenen Sonnenlichteinfall erfasst, um hiervon abhängig die Schwenkstellung der Solarmodulaufnahme einzustellen.

Eine nachführbare Solaranlage ist beispielsweise aus dem Dokument DE 1.03 01 550 A1 bekannt. Bei der bekannten Solaranlage sind eine horizontale Verstelleinheit zum Verschwenken der Solarmodulaufnahme um eine vertikale Schwenkachse und eine Neigungsverstelleinheit zum Verschwenken der Solarmodulaufnahme um eine horizontale Schwenkachse vorgesehen. Eine Nachführeinrichtung für eine Photovoltaikanlage ist weiterhin aus dem Dokument DE 10 2005 014 320 A1 bekannt. Es ist eine mechanische Kopplung der vertikalen und der horizontalen Nachführung vorgesehen, so dass die Nachführung in der horizontalen Achse über eine Stellbewegung des Antriebs für die vertikale Achse bewirkt wird.

In dem Dokument WO 03/031879 A2 ist ein Tragesystem für eine nachführbare Solaranlage beschrieben, bei dem mit einem die Solarmodulaufnahme tragenden Ständersystem eine Drei-Punkt-Lagerung realisiert ist. Die Solarmodulaufnahme ist auf einem von dem Ständersystem umfassten und die Drei-Punkt-Lagerung mit realisierendem Ständerelement montiert, welches darüber hinaus zum Schwenken der Solarmodulaufnahme drehbar gelagert ist.

Aus dem Dokument FR 2,354,590 ist ein Tragesystem für eine nachführbare Solaranlage bekannt, bei dem eine Solarmodulaufnahme von einem Ständersystem getragen wird, welches für einen oberen und einen unteren Stützpunkt eine Drei-Punkt-Lagerung vorsieht. Die Solarmodulaufnahme ist schwenkbar angeordnet.

Aus dem Dokument DE 36 44 450 A1 ist eine Vorrichtung zum Ausrichten strahlungsempfindlicher Flächen auf stellare Strahlungsquellen bekannt, bei der ein tetraederförmiges Ständersystem gebildet ist.

Im Dokument US 4,174,704 ist ein Tragesystem für eine Solaranlage offenbart, bei der eine Aufnahme auf zwei Pfosten gelagert ist. Schließlich beschreibt das Dokument DE 10 2005 015 346 A1 eine Trageeinrichtung für eine dachförmig aufgebaute Solaranlage, bei der eine schräg gelagerte Solarmodulaufnahme von aufrecht stehenden Ständern gestützt wird.

### Zusammenfassung der Erfindung

Aufgabe der Erfindung ist es, ein verbessertes Tragesystem für eine nachführbare Solaranlage sowie einen Bausatz für ein solches Tragesystem anzugeben, bei denen die mechanische Stabilität optimiert ist und die gleichzeitig einen montagefreundlichen und platzsparenden Aufbau ermöglichen.

Diese Aufgabe wird erfindungsgemäß durch ein Tragesystem für eine nachführbare Solaranlage nach den unabhängigen Ansprüchen 1 und 2 sowie einen Bausatz für ein solches Tragesystem nach dem unabhängigen Anspruch 21 gelöst.

Erfindungsgemäß ist ein Tragesystem für eine nachführbare Solaranlage, insbesondere bodengestützte Solaranlage, mit einem Ständersystem und einer Solarmodulaufnahme geschaffen, die konfiguriert ist, mehrere Solarmodule in einer flächigen Anordnung aufzunehmen, und die an dem Ständersystem zum automatischen Nachführen um eine Schwenkachse zwischen Endstellungen schwenkbar montiert ist, wobei die Solarmodulaufnahme an beabstandeten Stützstellen von dem Ständersystem aufgenommen ist, die mittels zugeordneter Ständerelemente fußseitig auf einer jeweiligen Drei-Punkt-Lagerung ruhen.

Nach einem weiteren Aspekt der Erfindung ist ein Bausatz zur Montage eines Tragesystems für eine nachführbare Solaranlage mit montierbaren Modulelementen für ein Ständersystem und eine Solarmodulaufnahme geschaffen, die konfiguriert ist, mehrere Solarmodule in einer flächigen Anordnung aufzunehmen, und die an dem Ständersystem zum automatischen Nachführen um eine Schwenkachse zwischen Endstellungen schwenkbar montiert ist, wobei die Solarmodulaufnahme an beabstandeten Stützstellen von dem Ständersystem aufgenommen ist, die mittels zugeordneter Ständerelemente fußseitig auf einer jeweiligen Drei-Punkt-Lagerung ruhen.

Für die zugeordneten Ständer ist erfindungsgemäß bei dem Tragesystem und dem Bausatz jeweils eine der folgenden Ausführungen gebildet: (i) Die zugeordneten Ständerelemente der jeweiligen Drei-Punkt-Lagerung laufen fußseitig in drei gemeinsamen Standbereichen zusammen, oder (ii) wenigstens ein zugeordnetes Ständerelement einer der beabstandeten Stützstellen verläuft zu einer anderen der beabstandeten Stützstellen und ruht auf der Drei-Punkt-Lagerung der anderen Stützstelle. Mit Hilfe dieser Ausgestaltung des fußseitigen Zusammenlaufens werden die Standbereiche für die zugeordneten Ständerelemente auf drei Standbereiche auf der Stellfläche beschränkt. Der Platzbedarf ist insgesamt minimiert. Bei der Ausführung (ii) stützt sich das wenigstens eine Ständerelement auf der Drei-Punkt-Lagerung der anderen Stützstelle ab. Hierbei besteht bei einer Ausgestaltung die Option, dass auf der anderen Stützstelle ruhende Ständerelemente rückseitig nahe an der oder sogar integriert in die Solarmodulaufnahme zu bilden.

Die Erfindung hat gegenüber dem Stand der Technik insbesondere den Vorteil, dass mit Hilfe der jeweiligen Drei-Punkt-Lagerung der den Stützstellen zugeordneten Ständerelemente, was auch als ein Drei-Fuß-Ständer gesehen werden kann, die mechanische Stabilität der nachführbaren Solaranlage verbessert ist. Eine Drei-Punkt-Lagerung sichert auch bei unebenen Bodenverhältnissen der Stellfläche einen stabilen Stand. Die Stützstellen sind jeweils individuell in dieser Art und Weise abgestützt. Das Tragesystem kann auf unterschiedlichem Untergrund stehen, sei es auf dem Erdboden, einer Gebäudefläche oder einer anderen geeigneten Fläche.

Solarmodule werden in Verbindung mit der vorgeschlagenen Anlage sowohl in gerahmter als auch in rahmenfreier Ausführung von der Solarmodulaufnahme aufgenommen.

Eine bevorzugte Weiterbildung der Erfindung sieht vor, dass die Stützstellen eine obere und eine untere Stützstelle umfassen, welche die Solarmodulaufnahme in einem oberen und einem unteren Abschnitt stützen. Bevorzugt ist die Solarmodulaufnahme in der oberen und der unteren Stützstelle mittels eines jeweiligen Gelenkes gelagert, wodurch die Schwenkbarkeit der Solarmodulaufnahme um die Schwenkachse ermöglicht ist, die sich in dieser Ausführungsform entlang einer Verbindungslinie zwischen den Stützstellen erstreckt.

Eine vorteilhafte Ausführungsform der Erfindung sieht vor, dass die zugeordneten Ständerelemente durchgehend von der jeweiligen Drei-Punkt-Lagerung bis zu den Stützstellen erstrecken, wodurch das mit Hilfe der zugeordneten Ständerelemente, welche sich in einer Ausgestaltung bevorzugt ausgehend von der Stellfläche erstrecken, einem unbeabsichtigten Verkippen der Solaranlage entgegengesetzte Moment optimiert.

Eine vorteilhafte Weiterbildung der Erfindung bei der Ausführung (ii) sieht vor, dass zwei zugeordnete Ständerelemente von der einen Stützstelle und zwei zugeordnete Ständerelemente von der anderen Stützstelle fußseitig in gemeinsamen Standbereichen zusammenlaufen.

Bei dieser Ausgestaltung der Erfindung kann vorgesehen sein, dass sich die zwei zugeordneten Ständerelemente von der einen Stützstelle und die zwei zugeordneten Ständerelemente von der anderen Stützstelle jeweils durchgehend zu den gemeinsamen Standbereichen erstrecken.

Bevorzugt sieht eine Fortbildung der Erfindung vor, dass die zugeordneten Ständerelemente jeweils als einstückiges Profilelement ausgeführt sind, was die mechanische Stabilität unterstützt. Die einstückigen Profilelemente sind zweckmäßig aus einem verzinkten Material. Darüber hinaus werden die Profilelemente bevorzugt als Hohlprofilelemente gebildet.

Bei einer vorteilhaften Ausgestaltung der Erfindung kann vorgesehen sein, dass die Schwenkachse benachbart zur rückseitigen Oberfläche der Solarmodulaufnahme gebildet ist. Hierdurch ist die Schwenkachse möglichst nah an das Solarmodul herangeführt.

Eine Weiterbildung der Erfindung kann vorsehen, dass das Ständersystem fußseitig auf mehreren Bodenankern ruht. In Verbindung mit dem fußseitigen Zusammenlaufen der zugeordneten Ständerelemente ist bei dieser Ausführungsform bevorzugt, dass die fußseitigen Enden, welche in einem gemeinsamen Ständerbereich zusammenlaufen, von einem gemeinsamen Bodenanker getragen werden. Als Bodenanker können beispielsweise in den Erdboden eingeschraubte oder -gedrehte Erdanker genutzt werden. Vorteilhaft ist es hierbei, auf jegliche Art von Fundamenten verzichten zu können.

Eine bevorzugte Weiterbildung der Erfindung sieht ein motorgetriebenes Zugseilsystem vor, welches konfiguriert ist, die Solarmodulaufnahme um die Schwenkachse zwischen den Endstellungen zu schwenken.

Bei einer zweckmäßigen Ausgestaltung der Erfindung kann vorgesehen sein, dass das motorgetriebene Zugseilsystem mit einem Zugseil, das wahlweise durchgehend und mit festbleibender Länge ausgeführt ist, gebildet ist, welches in voneinander beabstandeten Befestigungsbereichen der Solarmodulaufnahme jeweils fixiert ist und friktionsgekoppelt über einer motorgetriebene Antriebsrolle läuft. Die Befestigung erfolgt wahlweise in äußeren Randbereichen oder eher mittig zwischen dem äußeren Rand der Solarmodulaufnahme und des Mitte. Mittels Drehen der motorgetriebenen Antriebsrolle wird die Zugseillänge auf einer Seite gekürzt während auf der anderen Seite zusätzliches Zugseil freigegeben wird. Ein Rutschen des Zugseils auf der Antriebsrolle wird aufgrund der zwischen Zugseil und Antriebsrollenoberfläche gebildeten Reibung verhindert. Bevorzugt ist ein das Zugseil führendes Profil rückseitig zur Solarmodulaufnahme gebildet, auf dem das Zugseil beim Schwenken der Solarmodulaufnahme abschnittsweise lagert.

Eine vorteilhafte Ausführungsform der Erfindung sieht vor, dass ein Antriebsmotor des Zugseilsystems in einer Blickrichtung von vom auf die Solarmodulaufnahme im wesentlichen mittig angeordnet ist. Auf diese Weise wird eine möglichst gleichmäßige Verteilung der Antriebsleistung auf die Bereiche der Solarmodulaufnahme erreicht, in denen das Zugseil jeweils befestigt ist.

Bevorzugt sieht eine Fortbildung der Erfindung vor, dass die Solarmodulaufnahme klappbar ausgeführt ist. Mit Hilfe der klappbaren Ausführung der Solarmodulaufnahme kann sowohl ein Zusammenklappen in Längsrichtung als auch ein Zusammenklappen in. Querrichtung ermöglicht sein. Mit Hilfe des Zusammenklappens ist ein platzsparender Transport der Solarmodulaufnahme ermöglicht, sei es zum Ort einer Erstmontage oder in Verbindung mit einem Transport zur Wartung einer bereits schon einmal installierten Anlage. Aber auch die platzsparende Lagerung von Solarmodulaufnahmen ist auf diese Weise ermöglicht. Je nach Anwendungsfall kann die Solarmodulaufnahme aus zwei, drei oder mehr klappbaren Teilelementen bestehen. In den zum Klappen notwendigen Knickstellen der Solarmodulaufnahme sind geeignete Scharniere angeordnet. Es kann wahlweise vorgesehen sein, dass die Scharniere in der ausgeklappten und / oder der eingeklappten Stellung der Solarmodulaufnahme verriegelbar sind, beispielsweise mittels Einstecken eines Verriegelungsbolzens.

Bei einer vorteilhaften Ausgestaltung der Erfindung kann vorgesehen sein, dass tragende Gestellelemente der Solarmodulaufnahme als Kabelkanal bildende Gestellelemente ausgeführt sind. In den so gebildeten Kabelkanälen können die notwendigen elektrischen Leitungen von und zu den Solarmodulen geschützt verlegt werden.

Eine Weiterbildung der Erfindung kann vorsehen, dass mit den Kabelkanal bildenden Gestellelementen nach einer Montage der Solarmodule in der Solarmodulaufnahme geschlossene Kabelkanäle gebildet sind, die wahlweise mit Öffnungen zur Kabeldurchführung versehen sind. Auf diese Weise sind die Kabel im wesentlichen vollständig geschützt verlegt

Eine bevorzugte Weiterbildung der Erfindung sieht vor, dass die Kabelkanal bildenden Gestellelemente mittels Hutprofilelementen gebildet sind. Mit Hilfe der Hutprofilelemente ist nicht nur die Ausbildung von Kabelkanälen ermöglicht. Vielmehr stellen die Hutprofilelemente darüber hinaus seitlich abstehende Flächen zur Verfügung, die für verschiedene Montagezwecke nutzbar sind, zum Beispiel um Durchbrüche für Schrauben oder Niete aufzunehmen.

Bei einer zweckmäßigen Ausgestaltung der Erfindung kann vorgesehen sein, dass die Solarmodule mittels nicht zerstörungsfrei lösbarer Verbindungen in der Solarmodulaufnahme gesichert sind, welche wahlweise als Schraubverbindungen ausgeführt sind. Die Solarmodule sind aus der Solarmodulaufnahme nur entfernbar, wenn vorher die nicht zerstörungsfrei lösbaren Verbindungen zuvor wenigstens zum Teil zerstört wurden. Auf diese Weise ist insbesondere eine effektive Diebstahlsicherung geschaffen. Ausführungen für nur mittels Zerstörung lösbaren Schraubverbindungen sind als solche in verschiedenen Ausgestaltungen bekannt. Als besonders bevorzugt haben sich jedoch Schraubverbindungen erwiesen, bei denen die aufzuschraubende Mutter mit einem abreißenden Profil versehen ist, insbesondere einem Sechskantprofil. Das abreißende Profil dient beim Ausbilden der Schraubverbindung zunächst dazu, einen geeigneten Schraubenschlüssel anzusetzen. Wenn die Mutter festgeschraubt ist und der Schraubenschlüssel weiter betätigt wird, reißt das Profil ab und hinterlässt eine Mutter ohne für einen Schraubenschlüssel greifbares Profil, wodurch das Lösen der Mutter verhindert ist.

Eine vorteilhafte Ausführungsform der Erfindung sieht den Endstellungen jeweils zugeordnete Bremseinrichtungen vor, die konfiguriert sind, eine Bewegung der Solarmodulaufnahme beim Schwenken in die Endstellungen jeweils zu bremsen, wahlweise mittels einer Friktionsbremsung. Mit Hilfe der jeweils zugeordneten Bremseinrichtung wird ein ungewolltes Auf schlagen der Solarmodulaufnahme in den Endstellungen verhindert. Auf dem letzten Wegabschnitt in die Endstellung wird mittels der Bremseinrichtung eine Bremskraft beaufschlagt.

Bevorzugt sieht eine Fortbildung der Erfindung vor, dass die Bremseinrichtungen jeweils mit einem Führungsabschnitt gebildet sind, welcher ein zugeordnetes Einführelement, welches an der Solarmodulaufnahme gebildet ist, friktionsgebremst aufnimmt. In einer konstruktiv mit wenig Aufwand ausführbaren Ausgestaltung ist der Führungsabschnitt mit Hilfe von zwei beabstandeten Flachbauteilen gebildet, in die das zugeordnete Einführelement bei der Annäherung an die Endstellung eingreift, wobei es hierbei gebremst wird. In einer Ausgestaltung werden die beiden Flachbauteile mittels einer Schraubverbindung und eines Abstandhalters in dem vorgewählten Abstand gehalten, welcher beim Einführen des Einführelementes eine Reibungsbremsung gewährleistet.

Bei einer vorteilhaften Ausgestaltung der Erfindung können Arretierungsmittel vorgesehen sein, die konfiguriert sind, die Solarmodulaufnahme in den Endstellungen jeweils zu arretieren. Die Arretierungsmittel sind zweckmäßig so ausgeführt, dass eine Arretierung nur vollzogen wird, wenn die Solarmodulaufnahme in der Endstellung in eine Arretierendstellung gelangt. Diese Arretierendstellung dient als Havariesicherung, wenn die Solarmodulaufnahme im Havariefall, beispielsweise bei orkanartigen Windverhältnissen, schlagartig auf die Endstellung zu bewegt wird. Bevorzugt sind die Arretierungsmittel nach einem Arretieren der Solarmodulaufnahme manuell lösbar. Dieses bedeutet, dass das Solarmodul im Havariefall in der Arretierendstellung verbleibt, bis per Hand die Arretierungsmittel wieder gelöst werden. Dementsprechend kann die Arretierendstellung von dem Solarmodul nur eingenommen werden, wenn eine mit Hilfe der Bremseinrichtung einstellbare Gegenkraft tatsächlich überwunden wird, was beim üblichen Schwenken der Solarmodulaufnahme nicht der Fall ist.

### Beschreibung bevorzugter Ausführungsbeispiele der Erfindung

Die Erfindung wird im folgenden anhand von Ausführungsbeispielen unter Bezugnahme auf Figuren einer Zeichnung näher erläutert. Hierbei zeigen:
- Fig. 1: eine nachführbare Solaranlage von hinten,
- Fig. 2: die nachführbare Solaranlage aus Fig. 1 von der Seite,
- Fig. 3: eine Solarmodulaufnahme in Draufsicht,
- Fig. 4: die Solarmodulaufnahme aus Fig. 3 in Seitenansicht,
- Fig. 5: eine vergrößerte Darstellung eines Bereiches einer Stützstelle, in welcher die Solarmodulaufnahme an einem Ständersystem aufgenommen ist,
- Fig. 6: eine vergrößerte Darstellung einer Fangvorrichtung und
- Fig. 7: eine vergrößerte Darstellung eines Antriebsmotors für ein Seilzugsystem.

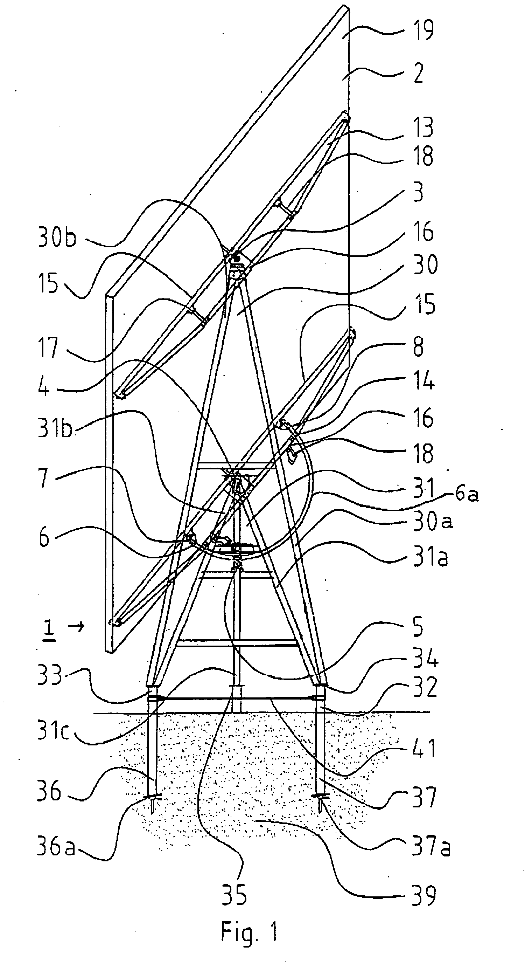

Im folgenden wird ein Tragesystem für eine nachführbare Solaranlage anhand von bevorzugten Ausführungsbeispielen unter Bezugnahme auf die Fig. 1 bis 7 näher erläutert. Hierbei werden in den Fig. 1 bis 7 für gleiche Merkmale die gleichen Bezugszeichen verwendet.

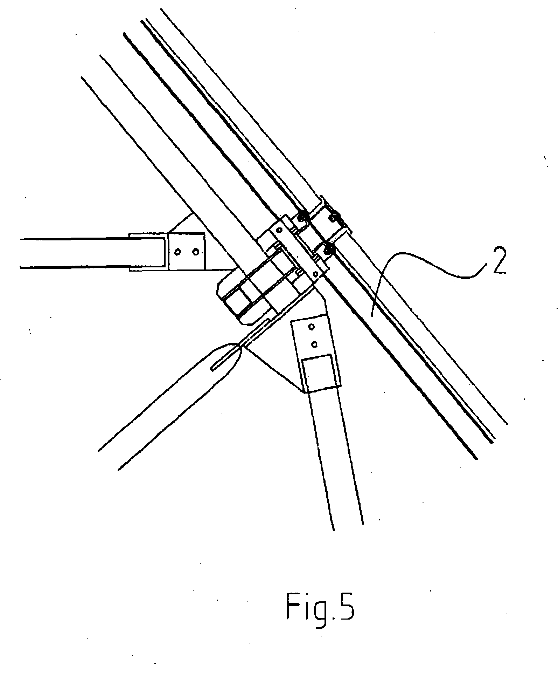

Fig. 1 zeigt eine nachführbare Solaranlage mit einem Tragesystem, welches ein Ständersystem 1 und eine hieran montierte Solarmodulaufnahme 2, welche in Fig. 1 zur Vereinfachung nur mittels einer gestrichelten Linie angedeutet ist, umfasst. Die Solarmodulaufnahme 2 ist an dem Ständersystem 1 im Bereich von Stützstellen 3, 4 aufgenommen, die gegenüber einem oberen und einem unteren Bereich der Solarmodulaufnahme 2 gebildet sind. Fig. 5 zeigt eine vergrößerte Darstellung des Bereiches einer der Stützstellen 3, 4. In den Stützstellen 3, 4 ist die Solarmodulaufnahme 2 mittels eines jeweiligen Gelenkes schwenkbar um eine Schwenkachse gelagert, die koaxial zu einer Verbindungslinie zwischen den beiden Stützstellen 3, 4 und bei der dargestellten Ausführungsform sogar direkt durch die Stützstellen 3, 4 verläuft. Die Solarmodulaufnahme 2 ist so aus einer Mittellage nach beiden Seiten um einen Winkel von maximal etwa 50° schwenkbar, wodurch die Stellung der Solarmodulaufnahme 2 tageszeitabhängig der Sonneneinstrahlung angepasst werden kann. Fig. 1 zeigt die Solarmodulaufnahme 2 in einer in Blickrichtung von hinten nach links geschwenkten Stellung.

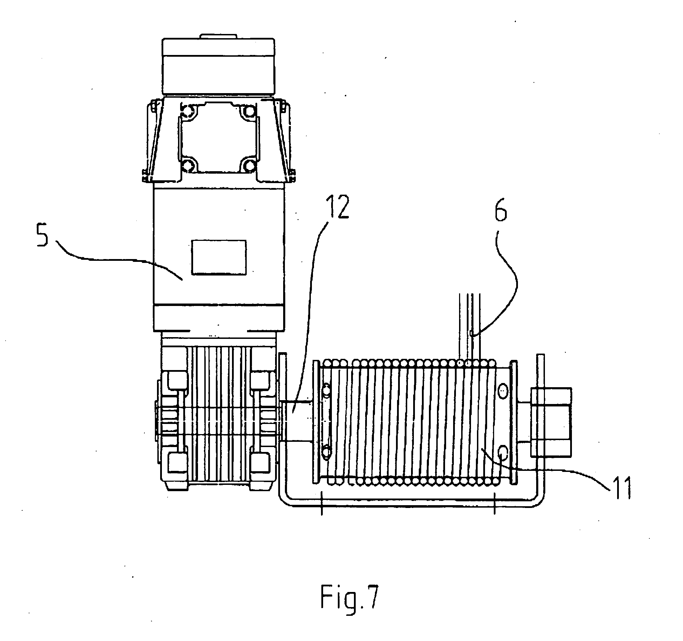

Zum Ausführen der Schwenkbewegung der Solarmodulaufnahme 2 ist ein motorgetriebenes Seilzugsystem mit einem Antriebsmotor 5 gebildet, mit dem ein Zugseil 6 betätigt wird, welches seinerseits in rückseitigen Bereichen 7, 8 an der Solarmodulaufnahme 2 befestigt und über eine auf einer Antriebskonsole gelagerte Antriebsrolle 11 (vgl. Fig. 7) geführt ist. Gemäß Fig. 1 lagert das Zugseil 6 auf einem gekrümmten Profil 6a, welches in der dargstellten Ausgestaltung halbkreisförmig gebildet ist. Auf diese Weise wird das Zugseil 6 beim Schwenken der Solarmodulaufnahme 2 geführt. Je nach Schwenkzustand legt es sich abschnittsweise auf dem gekrümmten Profil 6a ab oder löst sich hiervon wieder. Die Befestigung des Zugseils 6 an der Solarmodulaufnahme 2 erfolgt etwa mittig zwischen der Stützstelle 4 und äußeren Randbereichen der Solarmodulaufnahme 2.

Fig. 7 zeigt eine vergrößerte Darstellung des Antriebsmotors 5 mit der Antriebsrolle 11, die auf einer Wickelwelle 12 gelagert ist, und dem hierauf gewickelten Zugseil 6 von der Seite. Mittels Drehen der Wickelwelle 12 wird das vorzugsweise als Edelstahlseil ausgeführte Zugseil 6 auf einer Seite eingezogen und zusätzliche Seillänge auf der anderen Seite freigegeben. Auf diese Weise wird die Solarmodulaufnahme 2 in gewünschte Schwenkstellungen gebracht.

Der Antriebsmotor 5, welcher zweckmäßig als ein wartungsfreier Elektromotor ausgeführt ist, ist mit einer zentralen Steuereinrichtung (nicht dargestellt) verbunden, von der Steuerungssignalen empfangen werden, die die zu einem jeweiligen Zeitpunkt einzunehmenden Schwenkstellung der Solarmodulaufnahme 2 vorgeben. Üblicherweise wird eine große Anzahl von solchen Solaranlagen gemeinsam an einem geeigneten Ort aufgestellt, um eine gewünschte Energiemenge zu erzeugen. Beispielsweise können bis zu 1000 Solaranlagen aufgestellt sein. Um eine Stromüberlast beim Ansteuern und Schwenken zu vermeiden, werden die Solaranlagen von der zentralen Steuereinrichtung blockweise, beispielsweise in Gruppen von etwa 50 Solaranlagen, zum Schwenken nacheinander angesteuert. Eine gleichartige blockweise Betriebsweise ist beim. Anfahren der Anlage nützlich, um eine Stromüberlast zu verhindern. Die Steuersignale werden von der zentralen Steuereinrichtung über ein Bussystem übertragen, an welches dann in der Solaranlage eine lokale Steuereinheit gekoppelt ist, die mit der zentralen Steuereinrichtung wahlweise eine Master-Slave-Anordnung bildet.

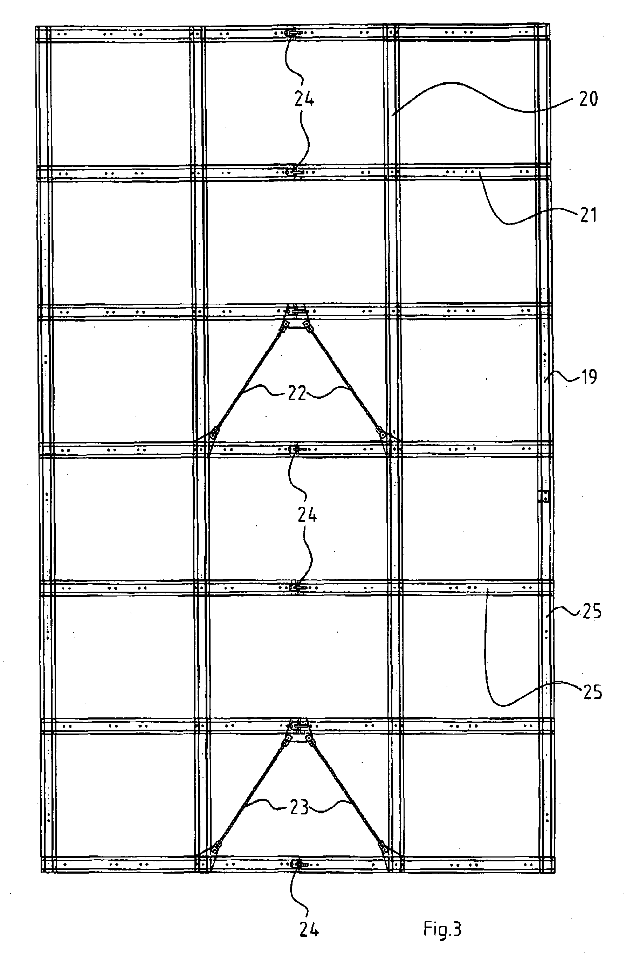

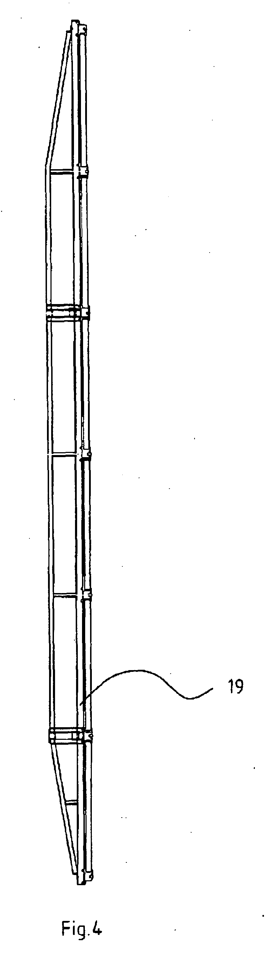

Gemäß Fig. 1 weist die Solarmodulaufnahme 2, welche im Detail dann in den Fig. 3 und 4 gezeigt ist, rückseitig Querträger 13, 14 auf, die in den Stützstellen 3, 4 gelagert sind. Die Querträger 13, 14 weisen Längselemente 15, 16 und Querelemente 17, 18 auf und stützen von hinten einen Modulaufnahmerahmen 19, welcher mit Hilfe von Profilelementen 20 (vgl. Fig. 3) gebildet ist, in die die Solarmodule (nicht dargestellt), seien dies als gerahmte oder rahmenlose Solarmodule ausgeführt, einer flächigen Anordnung entsprechend eingelagert werden. Die Profilelemente 20 sind mittels nicht zerstörungsfrei lösbarer Schraubverbindungen 21 verbunden. Hierdurch sind die Solarmodule aus der Solarmodulaufnahme 2 nur entfernbar, wenn vorher die nicht zerstörungsfrei lösbaren Schraubverbindungen 21 (vgl. Fig. 3) wenigstens zum Teil zerstört wurden. Auf diese Weise ist insbesondere eine effektive Diebstahlsicherung geschaffen.

Gemäß Fig. 3 versteifen zusätzliche Verstrebungen 22, 23 den Modulaufnahmerahmen 19 im in den Stützstellen 3, 4 zugeordneten Bereichen, Darüber hinaus ist der Modulaufnahmerahmen 19 mit Scharnieren 24 versehen, die ein Zusammenklappen des Modulaufnahmerahmens 19 ermöglichen, insbesondere zum platzsparenden Transport und zur platzsparenden Lagerung. Beim Zusammenklappen knickt der Modulaufnahmerahmen 19 in den Bereichen der Scharniere 24 ein.

In den Profilelementen 20 des Modulaufnahmerahmens 19 sind Kabelkanäle 25 gebildet, in denen elektrische Kabel verlegt werden können, die zu den Solarmodulen führen. Nach der Montage der Solarmodule in dem Modulaufnahmerahmen 19 sind die Kabelkanäle 25 durch diese abgedeckt, wodurch im wesentlichen geschlossene Kabelkanäle gebildet sind, die selbstverständlich mit Öffnungen zum Herausführen der Kabel an den notwendigen Stellen zu versehen sind.

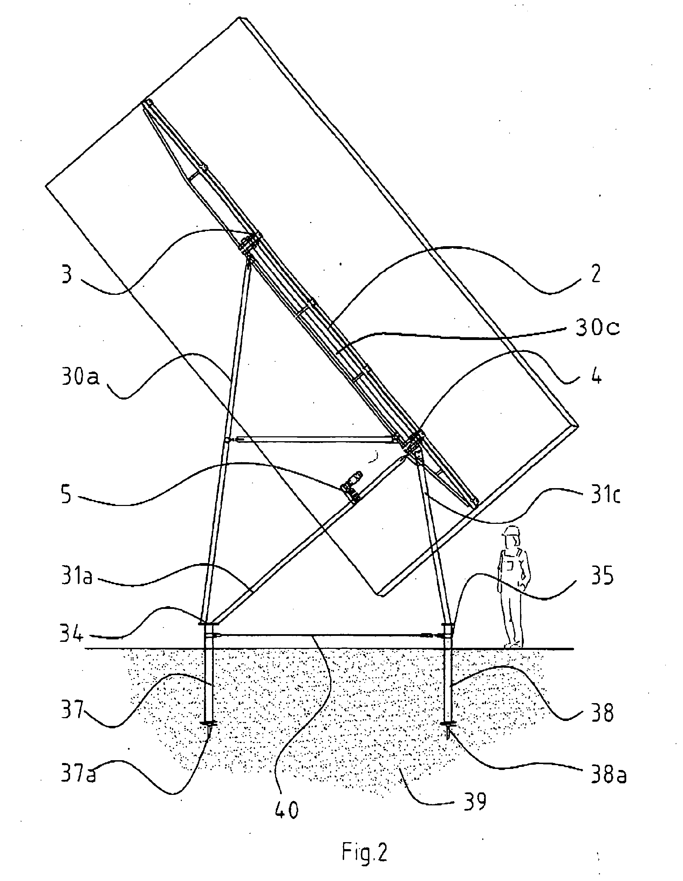

Das Ständersystem 1 umfasst gemäß den Fig. 1 und 2 zwei Drei-Fuß-Ständer 30, 31, die mit Hilfe zugeordneter Ständerelemente 30a, 30b, 30c und 31a, 31b, 31c gebildet sind und für die Stützstellen 3, 4 eine jeweilige Drei-Punkt-Lagerung realisieren, wobei in Fig. 1 zur Vereinfachung der Darstellung ein dem Stützpunkt 3 zugeordnetes Ständerelement 30c nicht gezeigt ist. Dieses Ständerelement 30c ruht bei der dargestellten Ausführungsform (vgl. Fig. 2) auf den der Stützstelle 4 zugeordneten Ständerelementen 31a, 31b, 31c.

Eine alternative Ausgestaltung (nicht dargestellt) mit ebenfalls mehreren Drei-Punkt-Lagerungen kann vorsehen, auch das Ständerelement 30c bis in den Bereich der Stellfläche zu führen. Die zugeordneten Ständerelemente 30a - 30c und 31a - 31c, welche in den verschiedenen Ausgestaltungen bevorzugt aus Rundprofilelementen gefertigt sind, erstrecken sich dann jeweils aus einem Fußbereich 32 bis in den Bereich der Stützstellen 3, 4 durchgehend und laufen für die beiden Drei-Fuß-Ständer 30, 31 im Fußbereich 32 zu gemeinsamen Standbereichen 33, 34, 35 zusammen. Im Unterschied dazu erstreckt sich in der in den Fig. 1 und 2 dargestellten Ausgestaltung zum Standbereich 35 nur das Ständerelement 31c, wohingegen das Ständerelement 30c zum Stützpunkt 4 führt.

Die Standbereiche 33, 34, 35 ihrerseits ruhen auf einem jeweiligen Bodenanker 36, 37, 38, die teilweise im Erdboden 39 versenkt sind. Zum Einbringen in den Erdboden 39 sind die Bodenanker 36, 37, 38 mit Einschraub- oder Eindrehhilfen 36a, 37a, 38a versehen. Des weiteren sind zwischen den Bodenankern 36, 37, 38 Verstrebungen 40, 41 gebildet.

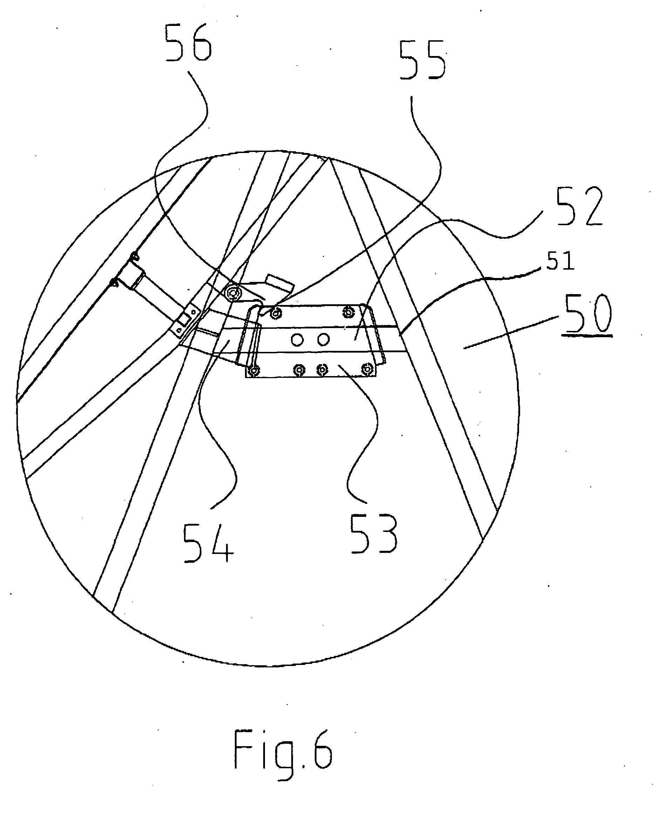

Gemäß Fig. 2 ist oberhalb des Antriebsmotors 5 eine Fangvorrichtung 50 an einer Rahmenverstrebung 51 des Ständersystems 1 gebildet, die gemäß der vergrößerten Darstellung in Fig. 6 eine Bremseinrichtung 52 mit einer Führung 53 und einem Fangschwert 54 sowie Arretierungsmittel 55 mit einer Klinke 56 umfasst. Mit Hilfe der Bremseinrichtung 52 wird die Solarmodulaufnahme 2 auf der letzten Wegstrecke in die jeweilige Endstellung der Schwenkbewegung abgebremst, indem das Fangschwert 54 in die mit Hilfe von beabstandeten Flachbauteilen gebildet Führung 53 eingreift und hierbei friktionsbedingt gebremst wird. Falls die Solarmodulaufnahme 2 bis in den Endbereich der Endstellung gelangt, verriegelt die Klinke 56 die Solarmodulaufnahme 2 dort automatisch. Ein Lösen ist nur manuell mittels Betätigen der Klinke 56 möglich, wodurch eine Havariesicherung gebildet ist.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführugsformen von Bedeutung sein.

## Patentansprüche

1. Tragesystem für eine nachführbare Solaranlage, insbesondere bodengestützte Solaranlage, mit einem Ständersystem (1) und einer Solarmodulaufnahme (2), die konfiguriert ist, mehrere Solarmodule in einer flächigen Anordnung aufzunehmen, und die an dem Ständersystem (1) zum automatischen Nachführen um eine Schwenkachse zwischen Endstellungen schwenkbar montiert ist, wobei die Solarmodulaufnahme (2) an beabstandeten Stützstellen (3, 4) von dem Ständersystem (1) aufgenommen ist, die mittels zugeordneter Ständerelemente (30a, 30b, 30c; 31a, 31b, 31c) fußseitig auf einer jeweiligen Drei-Punkt-Lagerung (30,31) ruhen, **dadurch gekennzeichnet, dass** die zugeordneten Ständerelemente (30a, 30b, 30c; 31a, 31b, 31c) der jeweiligen Drei-Punkt-Lagerung (30,31) fußseitig in drei gemeinsamen Standbereichen (33, 34, 35) zusammenlaufen.

2. Tragesystem für eine nachführbare Solaranlage, insbesondere bodengestützte Solaranlage, mit einem Ständersystem (1) und einer Solarmodulaufnahme (2), die konfiguriert ist, mehrere Solarmodule in einer flächigen Anordnung aufzunehmen, und die an dem Ständersystem (1) zum automatischen Nachführen um eine Schwenkachse zwischen Endstellungen schwenkbar montiert ist, wobei die Solarmodulaufnahme (2) an beabstandeten Stützstellen (3, 4) von dem Ständersystem (1) aufgenommen ist, die mittels zugeordneter Ständerelemente (30a, 30b, 30c; 31a, 31b, 31c) fußseitig auf einer jeweiligen Drei-Punkt-Lagerung (30,31) ruhen, **dadurch gekennzeichnet, dass** wenigstens ein zugeordnetes Ständerelement (30c) einer der beabstandeten Stützstellen (3) zu einer anderen der beabstandeten Stützstellen (4) verläuft und auf der Drei-Punkt-Lagerung (31) der anderen Stützstelle (4) ruht.

3. Tragesystem nach Anspruch 1 oder 2, **dadurch gekennzeichnet, dass** die Stützstellen (3, 4) eine obere und eine untere Stützstelle umfassen, welche die Solarmodulaufnahme (2) in einem oberen und einem unteren Abschnitt stützen.

4. Tragesystem nach Anspruch 1 oder 3, **dadurch gekennzeichnet, dass** sich zugeordneten Ständerelemente (30a, 30b, 30c; 31a, 31b, 31c) durchgehend von der jeweiligen Drei-Punkt-Lagerung bis zu den Stützstellen (3, 4) erstrecken.

5. Tragesystem nach Anspruch 2 oder Ansprüche 2 und 3, **dadurch gekennzeichnet, dass** zwei zugeordnete Ständerelemente (30a, 30b) von der einen Stützstelle (3) und zwei zugeordnete Ständerelemente (31a, 31b) von der anderen Stützstelle (4) fußseitig in gemeinsamen Standbereichen (33, 34) zusammenlaufen.

6. Tragesystem nach Anspruch 5, **dadurch gekennzeichnet, dass** sich die zwei zugeordneten Ständerelemente (30a, 30b) von der einen Stützstelle und die zwei zugeordneten Ständerelemente (31a, 31b) von der anderen Stützstelle jeweils durchgehend zu den gemeinsamen Standbereichen (33, 34) erstrecken.

7. Tragesystem nach einem der vorangehenden Ansprüche, **dadurch gekennzeichnet, dass** die zugeordneten Ständerelemente (30a, 30b, 30c; 31a, 31b, 31c) jeweils als einstückiges Profilelement ausgeführt sind.

8. Tragesystem nach einem der vorangehenden Ansprüche, **dadurch gekennzeichnet, dass** die Schwenkachse benachbart zur rückseitigen Oberfläche der Solarmodulaufnahme (2) gebildet ist.

9. Tragesystem nach einem der vorangehenden Ansprüche, **dadurch gekennzeichnet, dass** das Ständersystem (1) fußseitig auf mehreren Bodenankern (36, 37, 38) ruht.

10. Tragesystem nach einem der vorangehenden Ansprüche, **gekennzeichnet durch** ein motorgetriebenes Zugseilsystem (5, ..., 12), welches konfiguriert ist, die Solarmodulaufnahme (2) um die Schwenkachse zwischen den Endstellungen zu schwenken.

11. Tragesystem nach Anspruch 10, **dadurch gekennzeichnet, dass** das motorgetriebene Zugseilsystem (5, ..., 12) mit einem Zugseil (6), das wahlweise durchgehend und mit festbleibender Länge ausgeführt ist, gebildet ist, welches in voneinander beabstandeten Befestigungsbereichen (7, 8) der Solarmodulaufnahme (2) jeweils fixiert ist und friktionsgekoppelt über einer motorgetriebene Antriebsrolle (11) läuft.

12. Tragesystem nach Anspruch 10 oder 11, **dadurch gekennzeichnet, dass** ein Antriebsmotor (5) des Zugseilsystems (5, ..., 12) in einer Blickrichtung von vom auf die Solarmodulaufnahme (2) im wesentlichen mittig angeordnet ist.

13. Tragesystem nach einem der vorangehenden Ansprüche, **dadurch gekennzeichnet, dass** die Solarmodulaufnahme (2) klappbar ausgeführt ist.

14. Tragesystem nach einem der vorangehenden Ansprüche, **dadurch gekennzeichnet, dass** tragende Gestellelemente (20) der Solarmodulaufnahme (2) als Kabelkanal (25) bildende Gestellelemente (20) gebildet sind.

15. Tragesystem nach Anspruch 14, **dadurch gekennzeichnet, dass** mit den Kabelkanal (25) bildenden Gestellelementen nach einer Montage der Solarmodule in der Solarmodulaufnahme (2) geschlossene Kabelkanäle ausgeführt sind, die wahlweise mit Öffnungen zur Kabeldurchführung versehen sind.

16. Tragesystem nach Anspruch 14 oder 15, **dadurch gekennzeichnet, dass** die Kabelkanal (25) bildenden Gestellelemente mittels Hutprofilelementen gebildet sind.

17. Tragesystem nach einem der vorangehenden Ansprüche, **dadurch gekennzeichnet, dass** die Solarmodule mittels nicht zerstörungsfrei lösbarer Verbindungen (21) in der Solarmodulaufnahme (2) gesichert sind, welche wahlweise als Schraubverbindungen ausgeführt sind.

18. Tragesystem nach einem der vorangehenden Ansprüche, **gekennzeichnet durch** den Endstellungen jeweils zugeordnete Bremseinrichtungen (52), die konfiguriert sind, eine Bewegung der Solarmodulaufnahme (2) beim Schwenken in die Endstellungen jeweils zu bremsen, wahlweise mittels einer Friktionsbremsung.

19. Tragesystem nach Anspruch 18, **dadurch gekennzeichnet, dass** die Bremseinrichtungen (52) jeweils mit einem Führungsabschnitt (53) gebildet sind, welcher ein zugeordnetes Einführelement (54), welches an der Solarmodulaufnahme (2) gebildet ist, friktionsgebremst aufnimmt.

20. Tragesystem nach einem der vorangehenden Ansprüche, **gekennzeichnet durch** Arretierungsmittel (55), die konfiguriert sind, die Solarmodulaufnahme (2) in den Endstellungen jeweils zu arretieren.

21. Bausatz zur Montage eines Tragesystems für eine nachführbare Solaranlage nach mindestens einem der vorangehenden Ansprüche mit montierbaren Modulelementen für ein Ständersystem (1) und eine Solarmodulaufnahme (2), die konfiguriert ist, mehrere Solarmodule in einer flächigen Anordnung aufzunehmen, und die an dem Ständersystem (1) zum automatischen Nachführen um eine Schwenkachse zwischen Endstellungen schwenkbar montiert ist, wobei die Solarmodulaufnahme (2) an beabstandeten Stützstellen (3, 4) von dem Ständersystem (1) aufgenommen ist, die mittels zugeordneter Ständerelemente (30a, 30b, 30c; 31a, 31b, 31c) fußseitig auf einer jeweiligen Drei-Punkt-Lagerung (30,31) ruhen, **dadurch gekennzeichnet, dass** für die zugeordneten Ständerelemente (30a, 30b, 30c; 31a, 31b, 31c) eine der folgenden Ausführungen gebildet ist:
(i) Die zugeordneten Ständerelemente (30a, 30b, 30c; 31a, 31b, 31c) der jeweiligen Drei-Punkt-Lagerung (30,31) laufen fußseitig in drei gemeinsamen Standbereichen (33, 34, 35) zusammen, oder
(ii) wenigstens ein zugeordnetes Ständerelement (30c) einer der beabstandeten Stützstellen (3) verläuft zu einer anderen der beabstandeten Stützstellen (4) und ruht auf der Drei-Punkt-Lagerung (31) der anderen Stützstelle (4).

## Claims

1. A carrier system for a trackable solar energy plant, in particular a ground-supported solar energy plant, comprising a support system (1) and a solar energy module retainer (2), which is configured to receive a plurality of solar energy modules in a laminar arrangement and is installed on the support system (1), for tracking automatically between final positions pivoting around a swivelling axis, wherein the solar energy module retainer (2) is held at separated support points (3, 4) of the support system (1) resting at the base on a respective three-point bearing (30, 31) by means of allocated support elements (30a, 30b, 30c; 31a, 31b, 31c) **characterized in that** the bases of the allocated support elements (30a, 30b, 30c; 31a, 31b, 31c) of the respective three-point bearing (30, 31) run together in three joint support areas (33, 34, 35).

2. A carrier system for a trackable solar energy plant, in particular a ground-supported solar energy plant, comprising a support system (1) and a solar energy module retainer (2), which is configured to receive a plurality of solar energy modules in a laminar arrangement and is installed on the support system (1), for tracking automatically between final positions pivoting around a swivelling axis, wherein the solar energy module retainer (2) is held at separated support points (3, 4) of the support system (1) resting at the base on a respective three-point bearing (30, 31) by means of allocated support elements (30a, 30b, 30c; 31a, 31b, 31c) **characterized in that** at least one allocated support element (30c) of one of the separated supported points (3) runs to another of the separated support points (4) and rests on the three-point bearing (31) of the other support point (4).

3. The carrier system in accordance with Claim 1 or 2, **characterized in that** the support points (3, 4) comprise an upper and a lower support point that support the solar energy module retainer (2) in an upper and a lower section.

4. The carrier system in accordance with Claim 1 or 3, **characterized in that** the allocated support elements (30a, 30b, 30c; 31a, 31b, 31c) stretch continuously from the respective three-point bearing to the support points (3, 4).

5. The carrier system in accordance with Claim 2 or Claims 2 and 3, **characterized in that** two allocated support elements (30a, 30b) from the one of the separated supported points (3) runs together with two allocated support elements (31a, 31b) from the other of the separated support points (4) at the base of joint support areas (33, 34).

6. The carrier system in accordance with Claim 5, **characterized in that** the two allocated support elements (30a, 30b) from the one of the separated supported points and the two allocated support elements (31a, 31b) from the other of the separated support points each stretch continuously to the joint support areas (33, 34).

7. The carrier system in accordance with one of the above Claims, **characterized in that** the allocated support elements (30a, 30b, 30c; 31a, 31b, 31c) are each executed as a one-piece profile element.

8. The carrier system in accordance with one of the above Claims, **characterized in that** the swivelling axis is formed adjacent the back surface of the solar energy module retainer (2).

9. The carrier system in accordance with one of the above Claims, **characterized in that** the base of the support system (1) rests on several ground anchors (36, 37, 38).

10. The carrier system in accordance with one of the above Claims, **characterized by** an engine-driven traction cable system (5, ..., 12) that is configured to pivot the solar energy module retainer (2) around the swivelling axis between the final positions.

11. The carrier system in accordance with Claim 10, **characterized in that** the engine-driven traction cable system (5, ..., 12) is formed with a traction cable (6), that is optionally executed continuously and with a retained length, is fixed in attachment areas distanced from each other (7, 8) of the solar energy module retainer (2), respectively, and runs coupled by friction through an engine-driven driving roller (11).

12. The carrier system in accordance with Claim 10 or 11, **characterized in that** a drive engine (5) of the traction cable system (5, ..., 12) is arranged on the solar energy module retainer (2) in the essential centre in the line of sight from the front.

13. The carrier system in accordance with one of the above Claims, **characterized in that** the solar energy module retainer (2) is executed as hinged.

14. The carrier system in accordance with one of the above Claims, **characterized in that** carrying mounting elements (20) of the solar energy module retainer (2) are formed as mounting elements (20) forming a cable channel (25).

15. The carrier system in accordance with Claim 14, **characterized in that** with the mounting elements forming the cable channel (25) closed cable channels are formed after an installation of the solar energy modules in the solar energy module retainer (2) that are provided optionally with openings for taking a cable through.

16. The carrier system in accordance with Claim 14 or 15, **characterized in that** the mounting elements forming the cable channel (25) are formed by means of top hat profile elements.

17. The carrier system in accordance with one of the above Claims, **characterized in that** the solar modules are secured in the solar energy module retainer (2) by means of not non-destructive detachable connections (21), optionally executed as screw couplings.

18. The carrier system in accordance with one of the above Claims, **characterized by** braking fittings (52) allocated respectively to the final positions and configured to brake a movement of the solar energy module retainer (2) during pivoting in the final positions, respectively, optionally by means of a friction brake.

19. The carrier system in accordance with Claim 18, **characterized in that** the braking fittings (52) are each formed with a guide section (53) that takes in an allocated inserted element (54) formed on the solar energy module retainer (2) with friction braking.

20. The carrier system in accordance with one of the above Claims, **characterized by** means of stopping (55) that are configured to stop the solar energy module retainer (2) at the respective final positions.

21. A kit for the installation of a carrier system for a trackable solar energy plant in accordance with at least one of the above Claims, with installable module elements for a support system (1) and a solar energy module retainer (2) that is configured to receive a plurality of solar energy modules in a laminar arrangement and is installed pivoting on the support system (1) for automatic tracking between final positions on a swivelling axis, wherein the solar energy module retainer (2) is held by the support system (1) at separated support points (3, 4) the bases of which rest on a respective three-point bearing (30, 31) by means of allocated support elements (30a, 30b, 30c; 31a, 31b, 31c), **characterized in that** one of the following embodiments is formed for the allocated support elements (30a, 30b, 30c; 31a, 31b, 31c):
(i) The bases of the allocated support elements (30a, 30b, 30c; 31a, 31b, 31c) of the respective three-point bearing (30, 31) run together in three joint support areas (33, 34, 35), or
(ii) at least one of the allocated support elements (30c) of one of the separated support points (3) runs to another separated support point (4) and rests on the three-point bearing (31) of the other support point (4).

## Revendications

1. Système de support pour une installation solaire à poursuite automatique, en particulier une installation solaire au sol, avec un système de montants (1) et un élément récepteur de modules solaires (2) qui est configuré pour recevoir plusieurs modules solaires dans une disposition plane et qui est monté pivotant autour d'un axe de pivotement entre des positions finales sur le système de montants (1) pour permettre la poursuite automatique, l'élément récepteur de modules solaires (2) étant supporté par le système de montants (1) sur des points d'appui espacés (3, 4) qui reposent, côté pied, sur une suspension à trois points respective (30, 31) au moyen d'éléments de montants associés (30a, 30b, 30c ; 31a, 31b, 31c), **caractérisé en ce que** les éléments de montants associés (30a, 30b, 30c; 31a, 31b, 31c) de la suspension à trois points respective (30, 31) convergent côté pied dans trois zones de base communes (33, 34, 35).

2. Système de support pour une installation solaire à poursuite automatique, en particulier une installation solaire au sol, avec un système de montants (1) et un élément récepteur de modules solaires (2) qui est configuré pour recevoir plusieurs modules solaires dans une disposition plane et qui est monté pivotant autour d'un axe de pivotement entre des positions finales sur le système de montants (1) pour permettre la poursuite automatique, l'élément récepteur de modules solaires (2) étant accueuilli par le système de montants (1) sur des points d'appui espacés (3, 4) qui reposent, côté pied, sur une suspension à trois points respective (30, 31) au moyen d'éléments de montants associés (30a, 30b, 30c; 31a, 31b, 31c), **caractérisé en ce qu'**au moins un élément de montant associé (30c) d'un des points d'appui espacés (3) s'étend vers un autre des points d'appui espacés (4) et repose sur la suspension à trois points (31) de l'autre point d'appui (4).

3. Système de support selon la revendication 1 ou 2, **caractérisé en ce que** les points d'appui (3, 4) comprennent un point d'appui supérieur et un point d'appui inférieur qui soutiennent l'élément récepteur de modules solaires (2) dans une portion supérieure et une portion inférieure.

4. Système de support selon la revendication 1 ou 3, **caractérisé en ce que** des éléments de montants associés (30a, 30b, 30c ; 31a, 31b, 31c) s'étendent sans interruption de la suspension à trois points respective aux points d'appui (3, 4).

5. Système de support selon la revendication 2 ou les revendications 2 et 3, **caractérisé en ce que** deux éléments de montants associés (30a, 30b) d'un point d'appui (3) et deux éléments de montants associés (31a, 31b) de l'autre point d'appui (4) convergent côté pied dans des zones de base communes (33, 34).

6. Système de support selon la revendication 5, **caractérisé en ce que** les deux éléments de montants associés (30a, 30b) d'un point d'appui et les deux éléments de montants associés (31a, 31b) de l'autre point d'appui s'étendent sans interruption vers les zones de base communes (33, 34).

7. Système de support selon une des revendications précédentes, **caractérisé en ce que** les éléments de montants associés (30a, 30b, 30c ; 31a, 31b, 31c) sont tous réalisés sous la forme d'éléments profilés d'une seule pièce.

8. Système de support selon une des revendications précédentes, **caractérisé en ce que** l'axe de pivotement est formé au voisinage de la surface arrière de l'élément récepteur de modules solaires (2).

9. Système de support selon une des revendications précédentes, **caractérisé en ce que** le système de montants (1) repose côté pied sur plusieurs ancrages au sol (36, 37, 38).

10. Système de support selon une des revendications précédentes, **caractérisé par** un système à câble de traction actionné par moteur (5, ..., 12), lequel est configuré pour faire pivoter l'élément récepteur de modules solaires (2) autour de l'axe de pivotement entre les positions finales.

11. Système de support selon la revendication 10, **caractérisé en ce que** le système à câble de traction actionné par moteur (5, ..., 12) est formé par un câble de traction (6) qui est réalisé au choix sans interruption et avec une longueur fixe, lequel est fixé dans des zones de fixation (7, 8) distantes les unes des autres de l'élément récepteur de modules solaires (2) et déplacé, couplé par friction, au moyen d'un rouleau d'entraînement actionné par moteur (11).

12. Système de support selon la revendication 10 ou 11, **caractérisé en ce qu'**un moteur d'entraînement (5) du système à câble de traction (5, ..., 12) est disposé de manière sensiblement centrée en regardant l'élément récepteur de modules solaires (2) de l'avant.

13. Système de support selon une des revendications précédentes, **caractérisé en ce que** l'élément récepteur de modules solaires (2) est réalisé avec possibilité de rabattement.

14. Système de support selon une des revendications précédentes, **caractérisé en ce que** des éléments de structure porteurs (20) de l'élément récepteur de modules solaires (2) sont réalisés sous la forme d'éléments de structure (20) formant conduit de câbles (25).

15. Système de support selon la revendication 14, **caractérisé en ce qu'**après un montage des modules solaires dans l'élément récepteur de modules solaires (2), des conduits de câbles fermés, pourvus au choix d'ouvertures pour le passage de câbles, sont réalisés avec les éléments de structure formant conduit de câbles (25).

16. Système de support selon la revendication 14 ou 15, **caractérisé en ce que** les éléments de structure formant conduit de câbles (25) sont formés au moyen d'éléments profilés en oméga.

17. Système de support selon une des revendications précédentes, **caractérisé en ce que** les modules solaires sont fixés au moyen de liaisons (21) non détachables sans destruction dans l'élément récepteur de modules solaires (2), lesquelles sont réalisées au choix sous forme de liaisons vissées.

18. Système de support selon une des revendications précédentes, **caractérisé par** des dispositifs de freinage (52) associés à chacune des positions finales, qui sont configurés pour freiner un mouvement de l'élément récepteur de modules solaires (2) lors du pivotement dans les positions finales, au choix au moyen d'un freinage par friction.

19. Système de support selon la revendication 18, **caractérisé en ce que** les dispositifs de freinage (52) sont formés chacun par une portion de guidage (53), laquelle reçoit, en le freinant par friction, un élément d'introduction associé (54) qui est formé sur l'élément récepteur de modules solaires (2).

20. Système de support selon une des revendications précédentes, **caractérisé par** des moyens d'arrêt (55) qui sont configuré pour arrêter l'élément récepteur de modules solaires (2) dans chacune des positions finales.

21. Kit de montage d'un système de support pour une installation solaire à poursuite automatique selon au moins une des revendications précédentes, avec des éléments modulaires assemblables pour un système de montants (1) et un élément récepteur de modules solaires (2) qui est configuré pour recevoir plusieurs modules solaires dans une disposition plane et qui est monté pivotant autour d'un axe de pivotement entre des positions finales sur le système de montants (1) pour permettre la poursuite automatique, l'élément récepteur de modules solaires (2) étant supporté par le système de montants (1) sur des points d'appui espacés (3, 4) qui reposent, côté pied, sur une suspension à trois points respective (30, 31) au moyen d'éléments de montants associés (30a, 30b, 30c ; 31a, 31b, 31c), **caractérisé en ce que** pour les éléments de montants associés (30a, 30b, 30c; 31a, 31b, 31c), un des modes de réalisation suivants est formé :
(i) les éléments de montants associés (30a, 30b, 30c ; 31a, 31b, 31c) de la suspension à trois points respective (30, 31) convergent côté pied dans trois zones de base communes (33, 34, 35), ou
(ii) au moins un élément de montant associé (30c) d'un des points d'appui espacés (3) s'étend vers un autre des points d'appui espacés (4) et repose sur la suspension à trois points (31) de l'autre point d'appui (4).
